Europäisches Patentamt

**European Patent Office**

**Office européen des brevets**

(11) Numéro de publication: **0 080 421**
A1

# (12) DEMANDE DE BREVET EUROPEEN

(21) Numéro de dépôt: 82420153.7

(22) Date de dépôt: 10.11.82

(51) Int. Cl.³: **G 05 D 23/13**

(30) Priorité: **12.11.81 FR 8121534**

(71) Demandeur: **Les Mitigeurs ERAM, 76-80, rue des Rancy, Lyon 3ème Rhône (FR)**

(43) Date de publication de la demande: **01.06.83**
**Bulletin 83/22**

(72) Inventeur: **Lucas, Pierre, 90, rue Greuze, Villeurbanne Rhône (FR)**

(84) Etats contractants désignés: **AT BE CH DE FR GB IT LI LU NL SE**

(74) Mandataire: **Maureau, Philippe, Cabinet Germain & Maureau Le Britannia - Tour C 20, bld Eugène Déruelle, F-69432 Lyon Cédex 03 (FR)**

(54) Mitigeur d'eau.

㊷ Dans ce mitigeur les deux fluides chaud et froid sont amenés centralement et axialement dans deux directions opposées à l'équilibreur de pression qui est constitué par une douille cylindrique (20) comportant une paroi centrale tranversale (21) délimitant deux cavités coaxiales (22, 23) dans lesquelles débouchent respectivement les conduits d'amenée d'eau chaude et d'eau froide, et présentant chacune des fentes radiales (24, 25), un cylindre (26) étant monté coulissant avec étanchéité sur la douille, qui présente des fentes radiales (27) plus rapprochées que les fentes radiales de la douille, de manière à pouvoir, en fonction de sa position par rapport à celle-ci, soit se trouver en correspondance avec les deux séries de fentes de la douille, soit obturer l'une des séries de fentes de cette dernière et dégager l'autre.

Application à la distribution d'eau sanitaire.

1

## "MITIGEUR D'EAU"

La présente invention a pour objet un mitigeur d'eau.

Il existe différents types de robinetteries pour l'alimentation d'un lavabo, évier, baignoire, douche ou similaires.

Une première solution consiste à prévoir des alimentations de l'appareil, totalement distinctes en eau chaude et en eau froide. Cet agencement est peu pratique à manipuler pour l'utilisateur, et est inenvisageable pour l'alimentation d'une douche, du fait qu'il n'y a pas de mélange d'eau chaude et d'eau froide.

Une seconde solution dérivée de la précédente consiste à prévoir une sortie commune en aval des deux robinets d'eau froide et d'eau chaude, sortie au niveau de laquelle s'effectue le mélange. Néanmoins, il est nécessaire d'agir sur deux boutons, impliquant des difficultés de réglage de la température d'eau souhaitée et du débit, et la nécessité de procéder à un nouveau réglage de température lors de chaque réglage de débit, et inversement.

Une autre solution consiste à disposer d'un mitigeur permettant, d'une part, de régler les proportions respectives d'eau chaude et d'eau froide et, d'autre part, de régler le débit sans influer sur la température. Les mitigeurs peuvent être monocommandes, ou chaque fonction, à savoir mélange eau chaude - eau froide et débit, peut être réglée par un organe spécifique.

Une forme élaborée de mitigeurs concerne les mitigeurs thermostatiques comportant un organe de réglage de la température, qui délivre un mélange possédant la température souhaitée, quelles que soient les variations pouvant intervenir sur les amenées d'eau froide et d'eau chaude, par exemple au niveau de la pression du débit et de la température de ces fluides.

Généralement, ces mitigeurs comprennent une vanne de mélange susceptible d'être actionnée à partir d'une position correspondant au réglage de température choisie, sous l'effet de la déformation d'éléments thermodilatables, constitués par exemple par un empilement de rondelles, lors des modifications d'alimentation en fluides. Pour que la précision du réglage de la température d'eau mélangée soit plus importante, il est également connu, dans le cas de certains mitigeurs thermostatiques, de prévoir un dispositif d'équilibrage des pressions d'arrivées d'eau froide et d'eau chaude.

2

Néanmoins, les mitigeurs connus à équilibreur de pression, et notamment les mitigeurs thermostatiques possèdent le plus souvent une structure très complexe, la réalisation des différentes pièces les constituant, notamment des pièces de fonderie, conduisant, d'une part, à des coûts très élevés et, d'autre part, à des appareils volumineux qu'il est difficile d'encastrer dans des parois de faible épaisseur.

Si un mitigeur mécanique possède l'avantage par rapport à un mélangeur de permettre de faire varier la température de sortie de l'eau avec un seul levier, il n'en demeure pas moins que, pour une position déterminée du levier, l'appareil se comporte comme un mélangeur à deux robinets, les sections ouvertes permettant les passages, respectivement, d'eau froide et d'eau chaude demeurant constante. Or, le débit d'un liquide étant fonction de la section de passage et de la pression, si la pression varie sur l'un des deux fluides, il en résulte une variation de la température d'eau mitigée, d'autant plus importante que les écarts de pression sont importants. Ceci peut être gênant, voire dangereux, si la pression d'eau froide chute ou si la pression d'eau chaude augmente sensiblement risquant d'entraîner des brûlures à l'utilisateur dans le cas d'un mitigeur de douche.

Un équilibreur permet d'avoir une pression parfaitement équilibrée entre l'eau chaude et l'eau froide à l'entrée de l'organe de mélange, procurant une température constante à la sortie du mitigeur, quelles que soient les pressions d'eau chaude et d'eau froide, ce qui constitue un facteur de sécurité important pour les mitigeurs de douches. De plus, avec un équilibreur de pression, la fermeture de l'une des arrivées d'eau se traduit instantanément par la fermeture de l'autre arrivée.

La présente invention vise à remédier à ces inconvénients.

A cet effet, dans le mitigeur qu'elle concerne, les deux fluides chaud et froid sont amenés centralement et axialement dans deux directions opposées à l'équilibreur de pression qui est constitué par une douille cylindrique comportant une paroi centrale transversale délimitant deux cavités coaxiales dans lesquelles débouchent, respectivement, les conduits d'amenée d'eau chaude et d'eau froide, et présentant chacune des fentes radiales, un cylindre étant monté coulissant avec étanchéité sur la douille, qui présente des fentes radiales plus rapprochées que les fentes radiales de la douille, de manière à pouvoir, en fonction de sa position par rapport à celle-ci, soit se trouver en correspondance avec les deux séries de fentes de la douille, soit obturer l'une des séries de fentes de cette dernière et dégager l'autre, le cylindre présentant lui-même, dans sa partie centrale, c'est-à-dire à mi-distance entre ses deux séries de fentes, un épaulement périphérique prenant appui avec étanchéité et avec possibilité de coulissement, contre la face interne d'une paroi cylindrique entre deux séries d'orifices de passage que comporte cette dernière.

Du fait de l'amenée centrale des deux fluides chaud et froid et de la disposition concentrique de l'équilibreur de pression et du clapet de régulation de température, l'appareil obtenu est de conception simple et très compact.

Dans la mesure où les pressions d'amenée d'eau froide et d'eau chaude sont égales, le cylindre est centré par rapport à la douille cylindrique, ménageant des passages de même section pour l'eau froide et pour l'eau chaude. Lorsque la pression de l'un des deux fluides augmente, il exerce sur la face axiale de l'épaulement du cylindre, située de son côté, une pression supérieure à la pression exercée par l'autre fluide sur la face opposée de l'épaulement.

Le cylindre se déplace donc du côté de l'arrivée du fluide de plus faible pression, augmentant la section de passage au niveau de ce fluide, et diminuant la section de passage pour l'autre fluide, cette diminution pouvant aller jusqu'à une annulation totale du passage.

Outre l'aspect régulation de pression, cet agencement est très intéressant d'un point de vue de la sécurité du fait que, si pour une raison quelconque, l'eau froide n'arrive plus au mitigeur, le cylindre de l'équilibreur de pression se déplace immédiatement pour couper l'arrivée d'eau chaude, évitant tout risque de brûlure de l'utilisateur.

Selon une première forme d'exécution, dans le cas d'une commande mécanique de la température de l'eau de sortie, les deux séries d'orifices ménagées dans la paroi cylindrique entourant l'équilibreur débouchent dans deux conduits respectivement d'eau froide et d'eau chaude, amenant ces deux fluides à un organe de mélange.

Selon une autre forme d'exécution, dans le cas d'un mitigeur comprenant un clapet de régulation du mélange actionné par un élément thermodilatable le clapet de régulation de la température d'eau mélangée entoure concentriquement l'équilibreur, et est lui-même traversé radialement par les flux d'eau chaude et d'eau froide avant que le mélange

4

d'eau passe au contact de l'élément thermodilatable.

L'invention est décrite ci-après en référence au dessin schématique annexé représentant à titre d'exemples non limitatifs, plusieurs formes d'exécution de ce mitigeur.

Figure 1 est une vue en coupe longitudinale d'un mitigeur thermostatique ;

Figures 2 à 4 sont trois vues en coupe longitudinale et à échelle agrandie de la partie de ce mitigeur correspondant à l'équilibrage de pression et à la régulation de température au cours de trois phases de fonctionnement ;

Figure 5 est une vue en coupe transversale de ce mitigeur ;

Figure 6 est une vue en coupe longitudinale d'une variante d'exécution d'un mitigeur thermostatique ;

Figures 7 à 9 sont trois vues de la partie alimentation d'un mitigeur mécanique, respectivement, en coupe longitudinale par un plan vertical, en coupe longitudinale par un plan horizontal et en coupe transversale.

Le mitigeur représenté au dessin comprend un corps (2), constitué par une pièce de fonderie de forme générale cylindrique, dans lequel débouchent une arrivée d'eau froide (3), une arrivée d'eau chaude (4) et une sortie (5) d'eau mélangée. L'extrémité du corps située du côté de l'arrivée d'eau chaude (4) est fermée, et comporte une chambre (6) débouchant axialement par un orifice (7) à l'intérieur de la seconde partie du corps. L'autre extrémité du corps est ouverte, et permet le montage à l'intérieur de celui-ci des différents éléments de régulation. Le corps présente, faisant saillie de sa face interne, deux épaulements, respectivement (8) et (9) servant au montage avec étanchéité d'une cartouche cylindrique (10) contenant les éléments actifs du mitigeur. Cette cartouche (10) est montée avec étanchéité par l'intermédiaire de joints, d'une part, contre la paroi (12) séparant la chambre (6) du reste du corps cylindrique et, d'autre part, contre les épaulements (8) et (9).

Le corps (2) délimite avec la cartouche (10) deux chambres annulaires. à savoir une première chambre (13) communiquant avec l'arrivée d'eau froide (3), et une seconde chambre (14), qui est la chambre d'eau mélangée communiquant avec la sortie d'eau (5).

La cartouche (10) comporte deux orifices pour l'amenée d'eau froide et d'eau chaude respectivement, l'orifice (15) pour l'amenée d'eau froide étant radial et débouchant dans la chambre (13), et l'orifice (16) d'amenée d'eau chaude débouchant dans la chambre (6). Au niveau de chaque orifice, respectivement (15) et (16), est disposé un clapet anti-retour (17).

Si l'eau chaude arrive directement au dispositif d'équilibrage de la pression, l'eau froide est amenée axialement et en direction inverse de celle d'amenée de l'eau chaude, au dispositif d'équilibrage de la pression par une tubulure (18). Cette tubulure sert au montage de l'élément thermodilatable constitué par un empilage de rondelles (19).

Le dispositif d'équilibrage de la pression est constitué par une douille (20) cylindrique, disposée axialement dans la cartouche (10), et comportant une paroi centrale (21) délimitant deux cavités, respectivement (22) pour l'amenée d'eau froide et (23) pour l'amenée d'eau chaude, ces deux cavités coaxiales présentant chacune des fentes radiales, respectivement (24) pour la cavité (22), et (25) pour la cavité (23). Sur la douille cylindrique est monté coulissant avec étanchéité un cylindre (26), qui présente des fentes radiales (27) plus rapprochées que les fentes radiales de la douille, de manière à pouvoir, en fonction de sa position par rapport à celle-ci, soit se trouver en correspondance avec les deux séries de fentes (24,25) de la douille, soit obturer plus ou moins l'une des séries de fentes de cette dernière et dégager l'autre. Le cylindre (26) présente, dans sa partie centrale, c'est-à-dire à mi-distance entre ses deux séries de fentes (27), un épaulement (28) périphérique apte à prendre appui avec étanchéité et avec possibilité de coulissement contre la face interne d'une paroi cylindrique fixe (29), entre les deux séries de fentes respectivement (30) et (31) que présente la paroi (29).

Sur la paroi fixe (29) est monté, déplaçable axialement et avec étanchéité, le clapet de régulation de la température d'eau mélangée qui est constitué par une douille cylindrique (32) présentant une série de fentes (33) réparties sur sa périphérie, dont chacune possède une longueur supérieure à la distance minimale entre les deux séries de fentes (30) et (31) de la paroi (29).

La douille cylindrique (32) formant clapet est soumise à l'action des rondelles thermodilatables (19) par l'intermédiaire d'une bague (34), ainsi qu'à l'action contraire de rondelles (35) agissant à la façon

6

d'un ressort.

La chambre contenant les rondelles thermostatiques (19) communique avec la chambre d'eau mélangée (14) par l'intermédiaire d'une série de fentes (36) ménagées radialement dans le corps de la cartouche (10). Le dispositif de réglage de la température est constitué par un volant (37) monté à l'extrémité ouverte du corps (2) de la robinetterie, c'est-à-dire du côté de l'arrivée d'eau froide (3), entraînant en rotation un moyeu (38) présentant une extrémité (39) en forme de came sur laquelle prend appui l'extrémité d'une tige (40), dont l'autre extrémité prend appui sur un poussoir (41), lui-même en appui sur l'empilage de rondelles.

D'un point de vue pratique, l'eau est amenée par les arrivées (3) et (4), traverse le dispositif d'équilibrage d'où elle sort radialement, traverse le clapet de régulation de température, pénètre dans la chambre annulaire ménagée entre celui-ci et le corps de la cartouche, passe au contact des rondelles thermodilatables (19), puis dans la chambre d'eau mélangée (14) d'où elle est évacuée par la sortie (5) sur laquelle est monté un dispositif de réglage du débit de type connu.

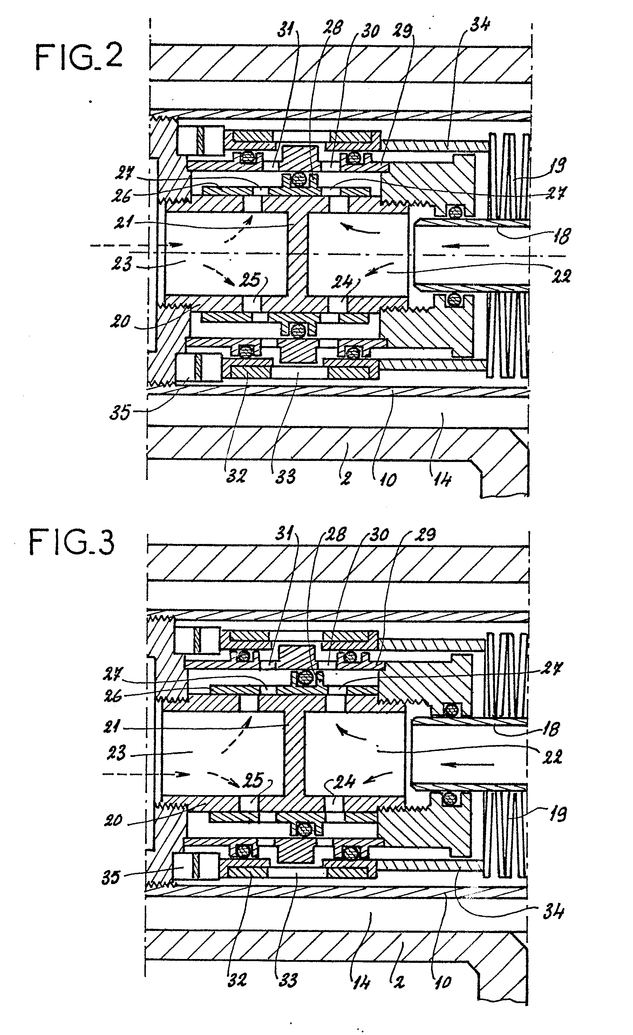

La figure 2 du dessin schématique annexé montre le dispositif d'équilibrage de pression et le dispositif de réglage de la température, dans le cas où les pressions d'amenée d'eau froide et d'eau chaude sont équilibrées, et dans le cas où les passages d'eau chaude et d'eau froide sont égaux au niveau du clapet de régulation.

La forme d'exécution représentée à la figure 3 correspond à une position de l'équilibreur de pression qui traduit une chute sensible de la pression d'amenée d'eau froide. Dans ce cas, la pression d'eau chaude étant supérieure à la pression d'eau froide, la force exercée sur l'épaulement (28) par l'eau chaude est supérieure à celle exercée en sens inverse par l'eau froide, et le cylindre (26) va se déplacer de manière à diminuer, en allant jusqu'à le couper, le passage d'eau chaude au niveau des fentes (25), et à augmenter le passage d'eau froide au niveau des fentes (24).

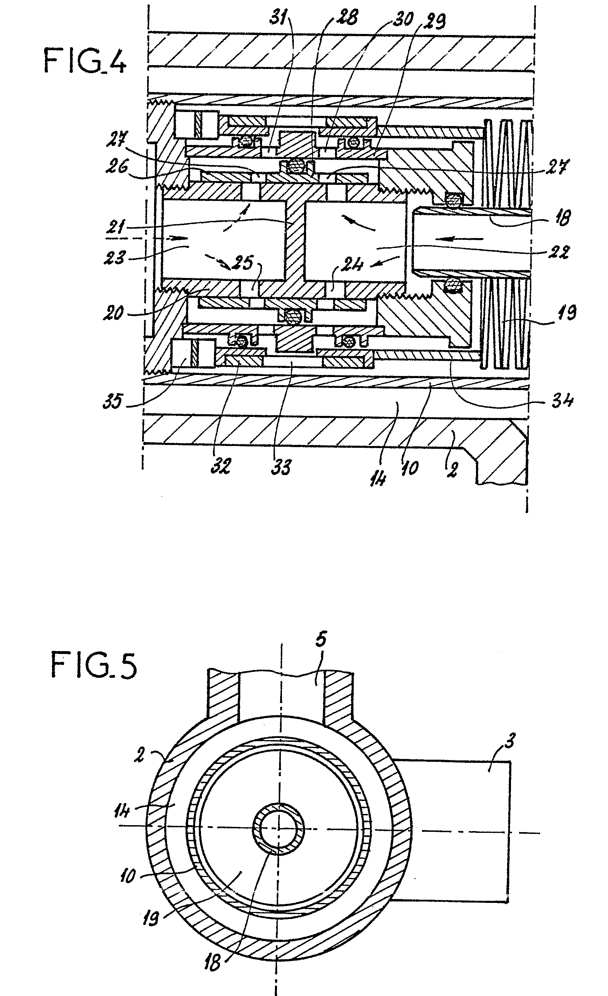

La forme d'exécution représentée à la figure 4, correspond à des pressions d'amenée d'eau chaude et d'eau froide équilibrées, mais à une variation de la température imposée par le clapet, qui diminue la section de passage d'eau froide, et augmente la section de passage d'eau chaude, soit à la suite d'une demande de l'utilisateur agissant

7

directement sur le bouton de réglage, soit à la suite d'une déformation des éléments thermodilatables, pour rétablir la température d'eau affichée initialement.

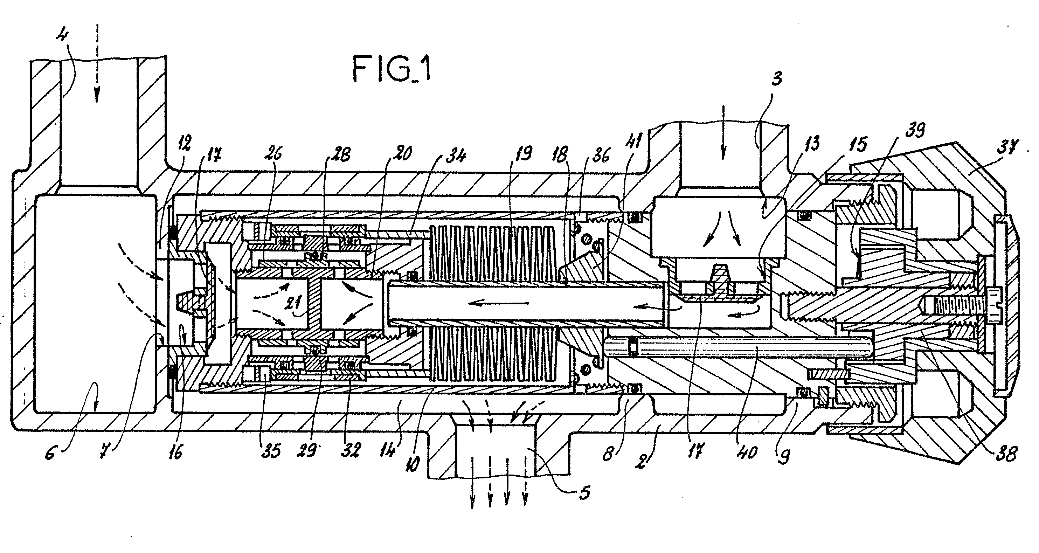

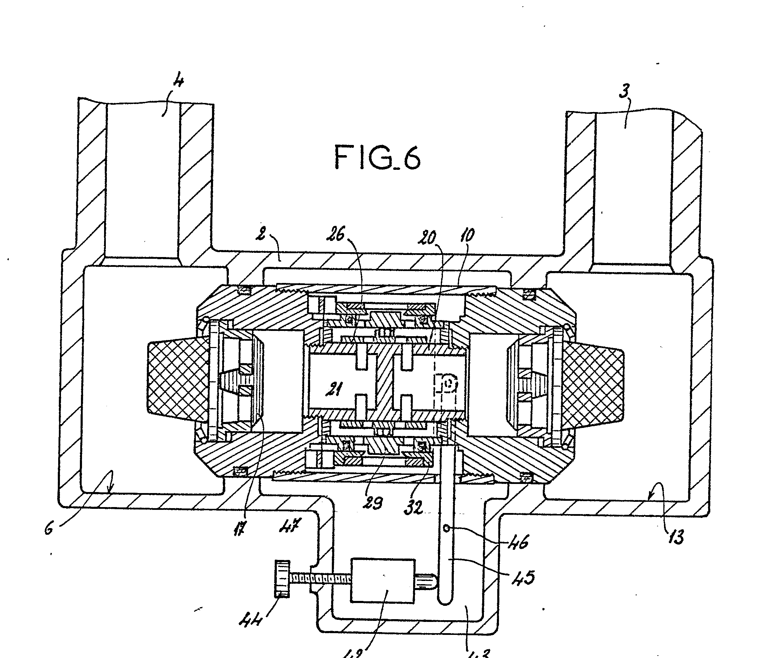

Le mitigeur thermostatique représenté à la figure 6 possède la même structure générale que celui représenté aux figures 1 à 5, en ce qui concerne le système d'équilibrage des pressions et le clapet de régulation de la température.

Ce mitigeur diffère essentiellement du précédent en ce sens que l'élément thermosensible (42) qu'il comporte n'est pas disposé dans le bloc d'amenée d'eau, mais dans le conduit (43) de sortie d'eau mitigée. Sur cet élément thermosensible, agit un volant (44) de réglage de la température. L'élément thermosensible prend appui sur un levier (45) articulé autour d'un axe (46), agissant sur le clapet de régulation de la température (32), à l'encontre de moyens élastiques (47) de rappel de celui-ci.

Cet agencement peut être intéressant dans le cas d'un mitigeur comportant des arrivées d'eau chaude et d'eau froide de section importante. En effet, dans un tel cas, l'utilisation d'éléments thermodilatables sous forme de rondelles conduirait à un encombrement prohibitif.

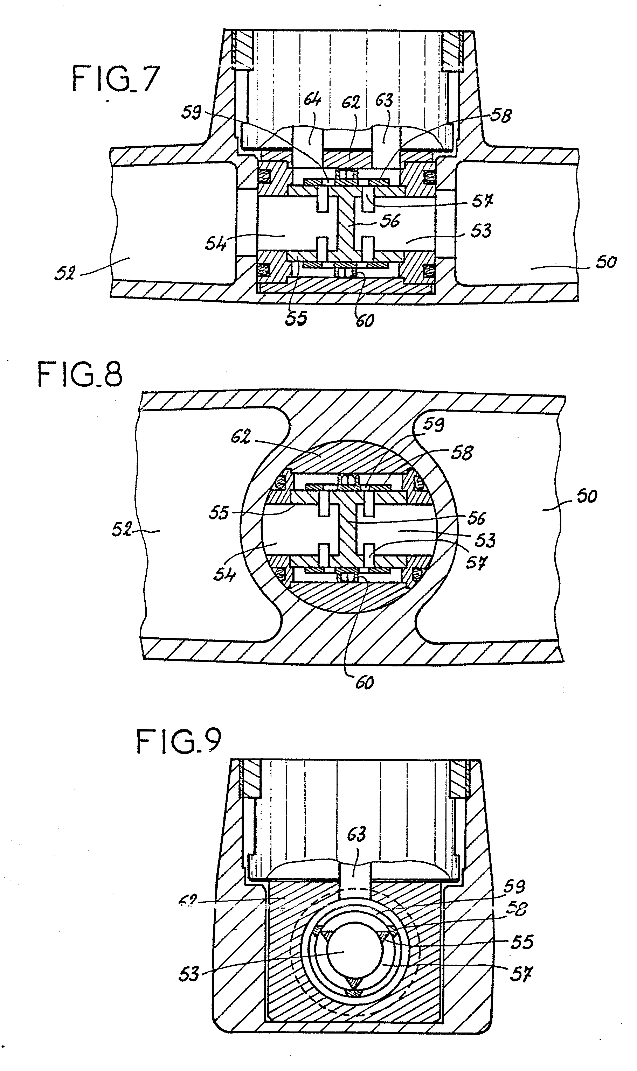

Les figures 7 à 9 représentent le système d'amenée d'eau à un mitigeur mécanique. Le corps de robinetterie comprend un conduit d'amenée d'eau froide (50) et un conduit d'amenée d'eau chaude (52) coaxiaux et orientés en sens inverse l'un de l'autre.

Ces deux conduits (50) et (52) débouchent dans deux chambres respectivement (53) et (54) délimitées par la paroi interne d'une douille cylindrique (55) présentant une paroi centrale (56) séparant les deux chambres. Cette douille cylindrique (55) présente des fentes radiales (57). Sur la douille cylindrique (55) est monté coulissant un cylindre (58) présentant des fentes radiales (59) plus rapprochées que celles (57) de la douille (55).

Dans sa partie centrale, le cylindre (58) présente un épaulement périphérique (60) prenant appui avec étanchéité et avec possibilité de coulissement contre la face interne d'une paroi cylindrique (62) entre deux tubulure de sortie respectivement (63) pour l'eau froide et (64) pour l'eau chaude débouchant dans cette dernière. Le fonctionnement de l'équilibreur de pression est exactement le même que dans les cas du mitigeur thermostatique décrit précédemment. Les tubulures

8

de sortie d'eau froide (63) et d'eau chaude (64) amènent l'eau à un organe de mélange de type connu.

9
## REVENDICATIONS

1. Mitigeur d'eau, du type comprenant un équilibreur des pressions de l'eau chaude et de l'eau froide, caractérisé en ce que les deux fluides chaud et froid sont amenés centralement et axialement dans deux directions opposées à l'équilibreur de pression qui est constitué par une douille cylindrique (20,55) comportant une paroi centrale transversale (21,56) délimitant deux cavités coaxiales (22,23, 53,54) dans lesquelles débouchent respectivement les conduits d'amenée d'eau chaude et d'eau froide, et présentant chacune des fentes radiales (24,25,57), un cylindre (26, 58) étant monté coulissant avec étanchéité sur la douille, qui présente des fentes radiales (27,59) plus rapprochées que les fentes radiales de la douille, de manière à pouvoir, en fonction de sa position par rapport à celle-ci, soit se trouver en correspondance avec les deux séries de fentes de la douille, soit obturer l'une des séries de fentes de cette dernière et dégager l'autre, le cylindre présentant lui-même, dans sa partie centrale, c'est-à-dire à mi-distance entre ses deux séries de fentes, un épaulement périphérique (28,60) prenant appui avec étanchéité et avec possibilité de coulissement, contre la face interne d'une paroi cylindrique (29,62) entre deux séries d'orifices de passage que comporte cette dernière.

2. Mitigeur selon la revendication 1, caractérisé en ce que dans le cas d'une commande mécanique de la température de l'eau de sortie, les deux séries d'orifices ménagés dans la paroi cylindrique (62) entourant l'équilibreur débouchent dans deux conduits respectivement d'eau froide (63) et d'eau chaude (64), amenant ces deux fluides à un organe de mélange.

3. Mitigeur selon la revendication 1, du type comprenant un clapet de régulation du mélange actionné par un élément thermodilatable, caractérisé en ce que le clapet de régulation (32) de la température d'eau mélangée entoure concentriquement l'équilibreur (20), et est lui-même traversé radialement par les flux d'eau chaude et d'eau froide avant que le mélange d'eau passe au contact de l'élément thermodilatable (19).

4. Mitigeur selon la revendication 3, caractérisé en ce que le clapet (32) de régulation de la température d'eau mélangée est constitué par une douille cylindrique qui, montée avec possibilité de coulissement axial relativement à la paroi cylindrique fixe (29) disposée à l'extérieur du dispositif d'équilibrage de pression, présente une série de fentes (33) réparties sur sa périphérie, dont chacune possède une longueur supérieure à la distance minimale entre les deux séries de fentes (30,31) de la paroi cylindrique (29).

5. Mitigeur selon la revendication 4, du type dans lequel l'élément thermodilatable est constitué par un empilage de rondelles (19), caractérisé en ce que cet empilage de rondelles (19) est disposé à une extrémité du clapet de régulation (32), et est traversé par la tubulure (18) d'amenée de l'un des fluides, eau chaude ou eau froide.

6. Mitigeur selon l'ensemble des revendications 4 et 5, caractérisé en ce que le corps (2) de robinetterie est de forme générale cylindrique, possède deux ouvertures radiales (3,4), chacune à proximité d'une extrémité de celui-ci pour les arrivées d'eau froide et d'eau chaude respectivement et une ouverture radiale (5) disposée dans sa partie centrale pour le départ d'eau mélangée, l'une des extrémités du corps étant fermée et l'autre étant ouverte et permettant le montage de la poignée de réglage (37) de la température, le corps présentant, du côté de son extrémité fermée, une chambre (6) dans laquelle débouchent, d'une part, une des ouvertures radiales (4) d'amenée d'eau et, d'autre part, une ouverture axiale (7) conduisant l'eau à l'équilibreur de pression, l'ensemble des éléments d'équilibrage de pression, de réglage de la température du mélange, et des rondelles thermosensibles, étant monté à l'intérieur d'une cartouche cylindrique étanche (10) délimitant avec la face interne du corps deux chambres annulaires (13,14) communiquant, pour la première, avec la seconde amenée d'eau et avec la tubulure sur laquelle sont engagées les rondelles thermodilatables (19), et pour la seconde avec l'orifice (5) de sortie d'eau mélangée, cette seconde chambre communiquant avec la chambre contenant les rondelles thermodilatables par une série de fentes radiales (36), la face interne du corps présentant deux portées circulaires où sont réalisées l'étanchéité de la première chambre par rapport à la seconde, et de la première chambre par rapport à l'extérieur.

7. Mitigeur selon l'une quelconque des revendications 5 et 6, caractérisé en ce que les moyens de réglage de la température sont constitués par un volant (37) entraînant en rotation un moyeu (38) équipé d'une came (39) sur laquelle prend appui une extrémité d'une tige (40) dont l'autre extrémité prend appui sur un poussoir (41) monté en bout de l'empilage de rondelles (19) du côté opposé au clapet de régulation, un ressort de rappel (35) agissant sur le clapet de régulation, du côté opposé à celui où se trouve l'empilage de rondelles.

8. Mitigeur selon l'une quelconque des revendications 3 et 4, caractérisé en ce que l'élément thermodilatable (42) est disposé dans la tubulure (43) commune de sortie d'eau chaude et d'eau froide, en aval du clapet (32) de régulation de température, et agit sur celui-ci par l'intermédiaire d'un levier (45).

FIG_1

0080421

**FIG.2**

**FIG.3**

0080421

FIG_4

FIG_5

0080421

FIG_6

**FIG.7**

**FIG.8**

**FIG.9**

Office européen
des brevets

C080421

Numéro de la demande

**RAPPORT DE RECHERCHE EUROPEENNE**

EP  82 42 0153

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 05 D  23/13 |
| A | FR-A-2 087 791  (AMMUS-SYTYTIN OY) *Page 2, ligne 31 - page 3, ligne 17; figure* | 1 | |
| | --- | | |
| A | FR-A-2 157 365  (A.KNAPP) *Page 3, ligne 40 - page 6, ligne 29; figure 1* | 1 | |
| | ----- | | |

**DOMAINES TECHNIQUES RECHERCHES (Int. Cl. ³)**

G 05 D
F 16 K

Le présent rapport de recherche a été établi pour toutes les revendications

| Lieu de la recherche | Date d'achèvement de la recherche | Examinateur |
|---|---|---|
| LA HAYE | 11-02-1983 | HELOT H.V. |